# EUROPEAN PATENT APPLICATION

(11) **EP 4 502 669 A1**
(43) Date of publication of application: **05.02.2025**
(21) Application number: 24179439.5
(22) Date of filing: 31.05.2024
(51) Int. Cl.: G02B 5/04, G02B 27/00, G02B 27/01

(54) **MULTI-PART GEOMETRIC WAVEGUIDE**

(30) Priority: 02.08.2023 US 202363517223 P; 19.12.2023 US 202318545839
(71) Applicant: Meta Platforms Technologies, LLC, Menlo Park, CA 94025 (US)
(72) Inventor: Jenkins, Kurt, Menlo Park (US)
(74) Representative: Murgitroyd & Company

(57) **Abstract**

A method of manufacturing a multi-part geometric waveguide includes forming a primary prism element and a separate secondary prism element, forming a functional coating over an active surface of the primary prism element, forming a functional coating over an active surface of the secondary prism element, aligning and bonding the primary prism element to a carrier plate, and aligning and bonding the secondary prism element to the carrier plate.

## Description

### FIELD

The present disclosure relates to geometric waveguides and methods of forming geometric waveguides.

### BACKGROUND

Virtual reality and augmented reality devices and headsets typically include an optical system having a microdisplay and imaging optics. The microdisplay may be configured to provide an image to be viewed either directly or indirectly using, for example, a micro OLED display or by illuminating a liquid-crystal based display. Display light may be projected to the eyes of a user using a waveguide where the light is in-coupled into the waveguide, transported therethrough by total internal reflection (TIR), and out-coupled when reaching the position of a viewer's eye.

In some systems, the imaging optics may include a geometric waveguide. With a geometric waveguide, light from the optical engine is in-coupled typically through a reflective mirror or prism, and then transported by TIR to an array of transflective surfaces that are configured to reflect a portion of the light to the eye of a user and transmit a remaining portion of the light for further propagation. Transmitted light may encounter another transflective surface where the reflection and transmission paradigm is repeated.

### SUMMARY

According to a first aspect, there is provided a geometric waveguide comprising: a carrier plate; an input prism mounted within a recess formed in the carrier plate; a primary prism element disposed within a primary pocket of the carrier plate; and a secondary prism element disposed within a secondary pocket of the carrier plate.

In some embodiments, the input prism comprises glass.

In some embodiments, the primary prism element and the secondary prism element each comprise a polymer material.

In some embodiments, a composition of the primary prism element is substantially equivalent to a composition of the secondary prism element.

In some embodiments, the primary prism element and the secondary prism element are each bonded to the carrier plate with an optical adhesive.

In some embodiments, a refractive index of the primary prism element is substantially equal to a refractive index of the secondary prism element.

In some embodiments, the primary prism element and the secondary prism element each comprise an array of parallel facets.

In some embodiments, the primary prism element comprises an array of facets that merge with a complementary structure formed in the primary pocket of the carrier plate, and the secondary prism element comprises an array of facets that merge with a complementary structure formed in the secondary pocket of the carrier plate.

In some embodiments, a surface of the primary prism element opposite to the primary prism element array of facets is substantially planar, a surface of the secondary prism element opposite to the secondary prism element array of facets is substantially planar, and the substantially planar surfaces are substantially co-planar.

In some embodiments, the geometric waveguide further comprises a capping layer disposed over both a surface of the primary prism element opposite to the primary prism element array of facets and a surface of the secondary prism element opposite to the secondary prism element array of facets.

In some embodiments, a refractive index of the capping layer is less than a refractive index of the primary prism element and less than a refractive index of the secondary prism element.

In some embodiments, light incident on the primary prism element is directed to the secondary prism element.

According to a further aspect, there is provided a geometric waveguide comprising: a carrier plate; a primary prism element disposed within a primary pocket of the carrier plate, the primary prism element comprising an array of facets oriented at a first angle; and a secondary prism element disposed within a secondary pocket of the carrier plate adjacent to the primary pocket, the secondary prism element comprising an array of facets oriented at a second angle.

In some embodiments, a top surface of the carrier plate is co-planar with a top surface of the primary prism element; and
the top surface of the carrier plate is co-planar with a top surface of the secondary prism element.

In some embodiments, a refractive index of the carrier plate, a refractive index of the primary prism element, and a refractive index of the secondary prism element are substantially equal.

In some embodiments, top and bottom surfaces of the carrier plate are co-planar.

According to a further aspect, there is provided a method comprising: forming a primary prism element; forming a secondary prism element; forming a functional coating over an active surface of the primary prism element; forming a functional coating over an active surface of the secondary prism element; aligning and bonding the primary prism element to a carrier plate; and aligning and bonding the secondary prism element to the carrier plate.

In some embodiments, forming the primary prism element comprises molding a first optical polymer, and forming the secondary prism element comprises molding a second optical polymer.

In some embodiments, the functional coating formed over the active surface of the primary prism element has a refractive index that is less than a refractive index of the primary prism element, and the functional coating formed over the active surface of the secondary prism element has a refractive index that is less than a refractive index of the secondary prism element.

In some embodiments, the method further comprises planarizing opposing surfaces of the carrier plate.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a perspective view of a carrier plate of a multi-part geometric waveguide according to various embodiments.
FIG. 2 shows an input prism for a multi-part geometric waveguide according to some embodiments.
FIG. 3 is a perspective view of an expansion element for a multi-part geometric waveguide according to some embodiments.
FIG. 4 depicts an eyebox element for a multi-part geometric waveguide according to various embodiments.
FIG. 5 is an exploded isometric view of a multi-part geometric waveguide having independently manufactured prism elements according to some embodiments.
FIG. 6 is a top-down plan view of an assembled multi-part geometric waveguide according to some embodiments.
FIG. 7 is a cross-sectional view of the multi-part geometric waveguide of FIG. 5 according to some embodiments.
FIG. 8 is a cross-sectional view of the multi-part geometric waveguide of FIG. 5 according to further embodiments.
FIG. 9 is an illustration of exemplary augmented-reality glasses that may be used in connection with embodiments of this disclosure.
FIG. 10 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Virtual reality and augmented reality devices and headsets typically include an optical system having a microdisplay and imaging optics. The microdisplay is configured to provide an image to be viewed either directly or indirectly using, for example, a micro OLED display or by illuminating a liquid-crystal based display. Display light may be projected to the eyes of a user using a waveguide where the light is in-coupled into the waveguide, transported therethrough by total internal reflection (TIR), and out-coupled when reaching the position of a viewer's eye.

In some systems, the imaging optics may include a geometric waveguide. With a geometric waveguide, light from the optical engine is in-coupled typically through a reflective mirror or prism, and then transported by TIR to an array of transflective surfaces that are configured to reflect a portion of the light to the eye of a user and transmit a remaining portion of the light for further propagation. Transmitted light may encounter another transflective surface where the reflection and transmission paradigm is repeated.

A variety of challenges are associated with the manufacture of a geometric waveguide, including the coating and alignment of the transflective mirrors. For instance, because the light intensity incident on successive mirrors may decrease following each reflection and transmission event, the designed reflection/transmission ratio may be different for each mirror within a prism element to ensure uniform light output. Moreover, the use of polarized light, such as with a liquid crystal on silicon (LCOS) microdisplay, may dictate a complex coating architecture that includes a plurality of layers requiring multiple masking and deposition steps.

Notwithstanding recent developments, it would be advantageous to provide an economical process for the manufacture of a geometric waveguide that minimizes imperfections in a final virtual image, including non-uniformity, black lines, and ghost images. In accordance with various embodiments, a geometric waveguide includes active components such as an expansion element and a decoupling element that are independently manufactured and processed. Through the independent manufacture of the different waveguide components, the design specifications for each component can be separately addressed and individually met.

According to particular embodiments, by separately manufacturing the different prism sections of a geometric waveguide, molding and coating operations can be designed for each component and downstream assembly processes can include optimized alignment and placement, which may allow for batch processing, lower cost, and improved performance and yield. Different prism sections may be molded to design tolerances, coated, aligned, and optically bonded to a carrier plate, for example. Index-matched optical bonding may be used to ensure acceptable transmissivity for augmented reality applications.

A geometric waveguide may include a carrier plate and two or more prism elements that are mounted on the carrier plate. The individual prism elements may be molded independently and optimized for form and flatness, and then independently coated. For instance, the prism elements may be trimmed and provided with one or more coatings prior to mounting to the carrier plate. In certain embodiments, an act of forming a prism element may be improved by molding thicker elements and using post-molding subtractive processing to introduce desired features and dimensions, including planarity of the prism element and the inclination angle of individual facets. Such an approach may promote dimensional fidelity and the avoidance of internal stresses in the molded parts.

A carrier plate may be molded to a desired thickness and may include pockets into which respective prism elements may be placed, aligned, and bonded. According to some embodiments, precision optomechanical locating features may be incorporated into the prism elements and/or the carrier plate to ensure accurate alignment.

The prism elements and the carrier plate may be molded from a suitable plastic material, such as polycarbonate, although further optical materials are contemplated. In some embodiments, plural prism elements may be formed from the same material and may have equivalent or substantially equivalent refractive indices, whereas the geometry of the prism facets and the functional coatings applied thereto may be configured differently for each prism element (e.g., for each facet).

In accordance with exemplary embodiments, a method of manufacturing a multi-part geometric waveguide may include forming a primary prism element and a separate secondary prism element, forming a functional coating over an active surface of the primary prism element, forming a functional coating over an active surface of the secondary prism element, aligning and bonding the primary prism element to a carrier plate, and aligning and bonding the secondary prism element to the carrier plate.

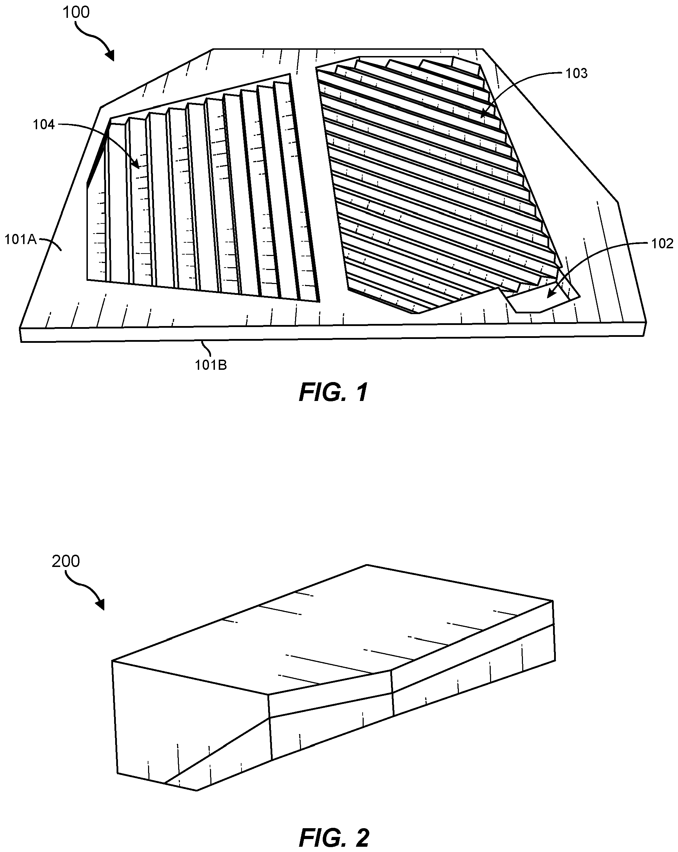

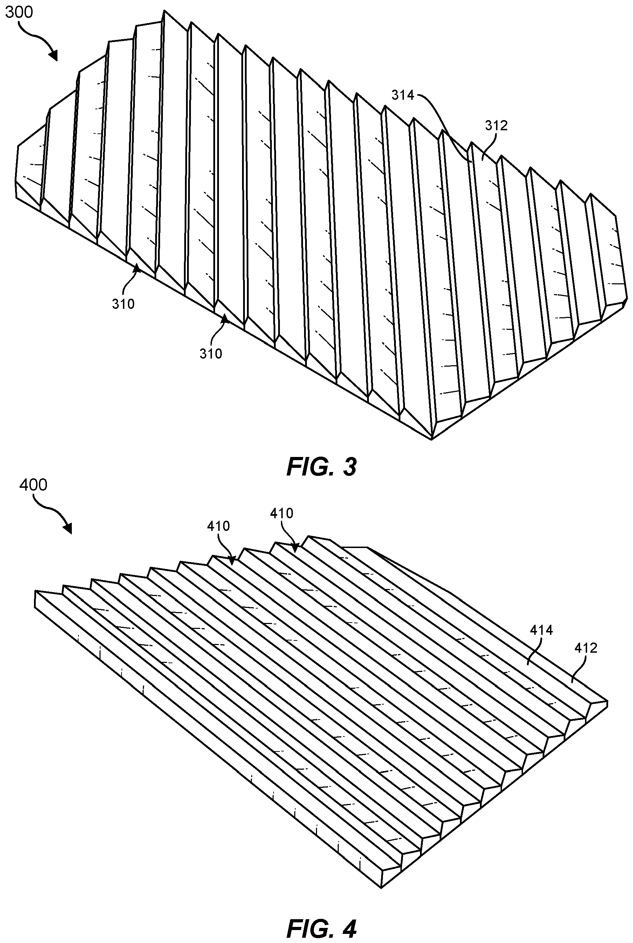

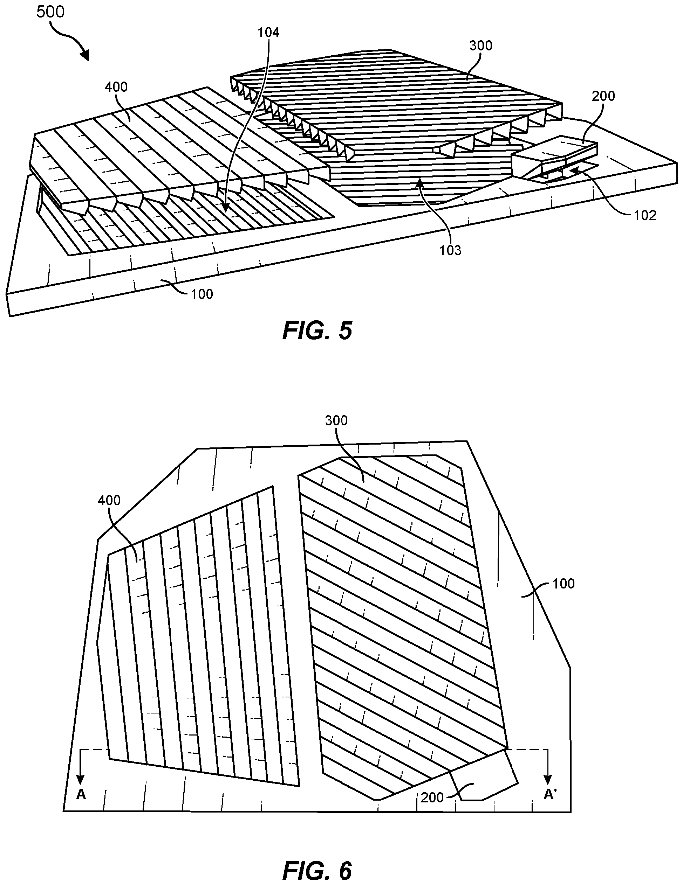

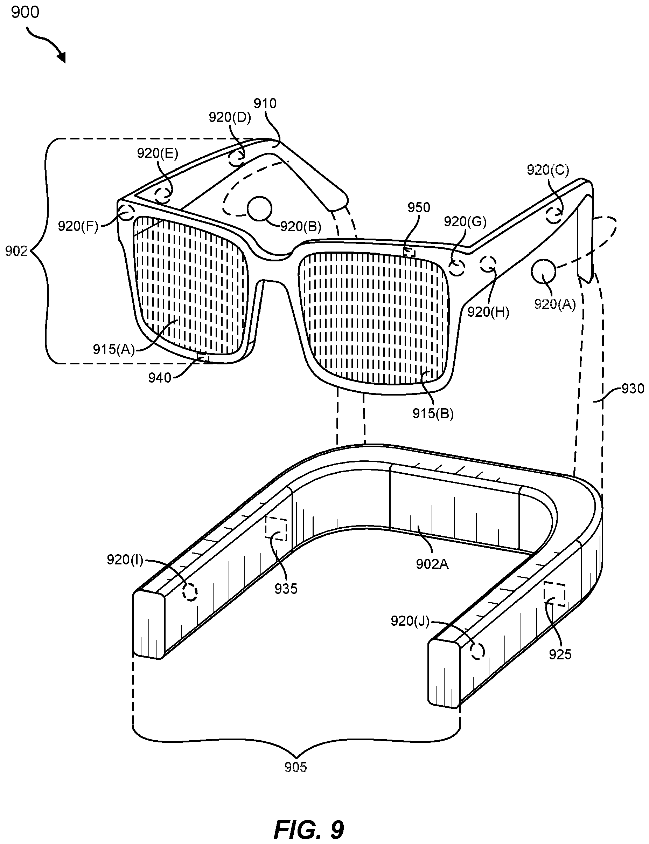

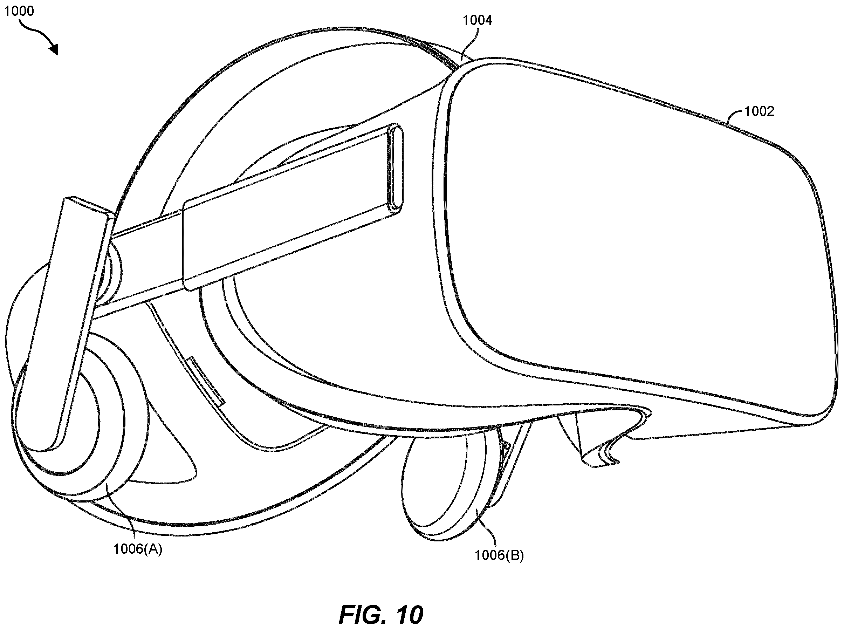

The following will provide, with reference to FIGS. 1-10, detailed descriptions of methods for manufacturing a geometric waveguide. The discussion associated with FIG. 1 includes a description of an example carrier plate. The discussion associated with FIG. 2 includes a description of an example input prism. The independent design, manufacture, and processing of different prism elements, including an expansion element and an eyebox element, are disclosed respectively in FIGS. 3 and 4. Schematic images showing the assembly of a multi-part 2D geometric waveguide having independently manufactured prism elements are shown in FIGS. 5-8. The discussion associated with FIGS. 9 and 10 relates to exemplary virtual reality and augmented reality devices that may include one or more multi-part geometric waveguides as disclosed herein.

Referring to FIG. 1, shown is a perspective view of a carrier plate for a multi-part geometric waveguide. Carrier plate 100 includes a recess 102 and pockets 103, 104 that are respectively configured to receive, support, and align various prism elements, such as an in-coupling element, an expansion element, and an eyebox (or out-coupling) element (not separately shown). Expansion element pocket 103 and eyebox element pocket 104 of carrier plate 100 may each include a faceted surface that is complementary to the facets formed on the corresponding prism element. Peripheral to recess 102 and pockets 103, 104, the carrier plate 100 has a top surface 101A, and opposite to pockets 103, 104, the carrier plate 100 has a bottom surface 101B.

A multi-part geometric waveguide may include an input prism. Referring to FIG. 2, an input prism 200 may be sized and dimensioned to direct image light into the waveguide. Input prism 200 may be formed from glass, for example.

A primary prism element is depicted in FIG. 3. Primary prism element 300 may include an expansion element that is configured to extend a beam of image light along a first dimension. The illustrated primary prism element 300 includes an array of facets 310 each having an active surface 312 and a draft surface 314. The primary prism element 300, including integral facets 310, may be substantially planar and may be formed by molding. In certain embodiments, active surfaces 312 may be coated with a functional optical coating.

A secondary prism element is depicted in FIG. 4. Secondary prism element 400 may include an out-coupling element that is configured to expand image light in a second dimension orthogonal to the first dimension and direct the expanded light to the eyes of a user. As will be appreciated, the design and manufacture of the secondary prism element 400 may be independent of the design and manufacture of the primary prism element 300. The illustrated secondary prism element 400 includes an array of facets 410 each having an active surface 412 and a draft surface 414. The primary prism element 400, including integral facets 410, may be substantially planar and may be formed by molding. In certain embodiments, active surfaces 412 may be coated with a functional optical coating.

By separating the manufacture of the primary prism element 300 from the manufacture of the secondary prism element 400, component-specific features may be addressed on a per-part basis resulting in greater yield and higher performance. For instance, more economical processing, such as batch processing, may be utilized to form different functional coatings on the active surfaces of the primary and secondary prism elements.

Referring to FIG. 5, primary prism element 300 and secondary prism element 400 may be aligned within respective pockets 103, 104 and optically bonded to carrier plate 100. In certain implementations, the primary prism element 300, the secondary prism element 400, and the carrier plate 100 may each be characterized by a shared refractive index. By way of example, notwithstanding the optical properties of the optical coatings, the material composition of the primary prism element 300, the secondary prism element 400, and the carrier plate 100 may be equivalent or substantially equivalent. Example materials that may be used to form the carrier plate 100 as well as the primary and secondary prism elements 300, 400 may include polycarbonate, although the use of further optical polymer materials is contemplated. A top-down plan view of the integrated structure 500 of FIG. 5 is shown in FIG. 6.

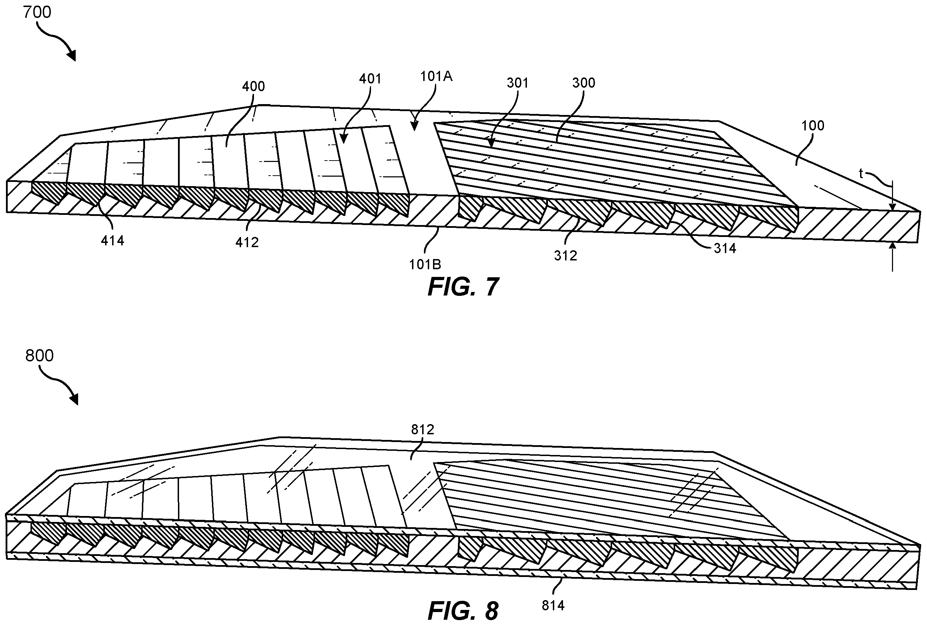

Turning to FIG. 7, shown is a cross-sectional view of the structure of FIG. 6 along line A-A'. Following assembly, top and bottom surfaces of the geometric waveguide 700, including carrier plate top surface 101A, primary prism element top surface 301, secondary prism element top surface 401, and carrier plate bottom surface 101B, may be polished or diamond turned to adjust the waveguide thickness (t) and/or flatness. In some embodiments, the carrier plate top surface 101A, the primary prism element top surface 301, and the secondary prism element top surface 401 may be co-planar. In particular embodiments, opposing major surfaces of the waveguide 700 may be parallel.

Referring to FIG. 8, following the placement, alignment, bonding, and polishing of the prism elements, a capping layer may be formed over the top and/or bottom surfaces of the waveguide. A capping layer, such as top capping layer 812 and bottom capping layer 814, may include a low refractive index (e.g., n<2) material. A low refractive index capping layer may have a refractive index that is less than a refractive index of the prism elements. A capping layer may include an anti-reflective coating in some embodiments.

A geometric waveguide (GWG) having high optical efficiency has a modular construction where its constituent elements are manufactured separately and then assembled. An exemplary geometric waveguide may include an in-coupling element such as a prism, an expansion element, and a decoupling element that are independently manufactured to their respective design specifications, coated with one or more functional layers, and then aligned and mounted on a carrier plate. That is, each component in the GWG may be individually molded and coated, allowing for batch processing and lower cost. A coating process may include lamination, for example, and may be used to form an antireflective coating over one or more facets of an expansion or decoupling element. By separately manufacturing the waveguide components, the manufacturing processes, including molding and coating, can be optimized for each component, and the assembly can be optimized for alignment and sizing to achieve a scalable, high yield method of manufacture.

### Example Embodiments

Example 1: A geometric waveguide includes a carrier plate, an input prism mounted within a recess formed in the carrier plate, a primary prism element disposed within a primary pocket of the carrier plate, and a secondary prism element disposed within a secondary pocket of the carrier plate.

Example 2: The geometric waveguide of Example 1, where the input prism is formed from glass.

Example 3: The geometric waveguide of any of Examples 1 and 2, where the primary prism element and the secondary prism element are each formed from a polymer.

Example 4: The geometric waveguide of any of Examples 1-3, where a composition of the primary prism element is substantially equivalent to a composition of the secondary prism element.

Example 5: The geometric waveguide of any of Examples 1-4, where the primary prism element and the secondary prism element are each bonded to the carrier plate with an optical adhesive.

Example 6: The geometric waveguide of any of Examples 1-5, where a refractive index of the primary prism element is substantially equal to a refractive index of the secondary prism element.

Example 7: The geometric waveguide of any of Examples 1-6, where the primary prism element and the secondary prism element each include an array of parallel facets.

Example 8: The geometric waveguide of any of Examples 1-7, where the primary prism element includes an array of facets that merge with a complementary structure formed in the primary pocket of the carrier plate, and the secondary prism element includes an array of facets that merge with a complementary structure formed in the secondary pocket of the carrier plate.

Example 9: The geometric waveguide of Example 8, where a surface of the primary prism element opposite to the primary prism element array of facets is substantially planar, a surface of the secondary prism element opposite to the secondary prism element array of facets is substantially planar, and the substantially planar surfaces are substantially co-planar.

Example 10: The geometric waveguide of any of Examples 1-9, further including a capping layer disposed over both a surface of the primary prism element opposite to the primary prism element array of facets and a surface of the secondary prism element opposite to the secondary prism element array of facets.

Example 11: The geometric waveguide of Example 10, where a refractive index of the capping layer is less than a refractive index of the primary prism element and less than a refractive index of the secondary prism element.

Example 12: The geometric waveguide of any of Examples 1-11, where light incident on the primary prism element is directed to the secondary prism element.

Example 13: A geometric waveguide includes a carrier plate, a primary prism element disposed within a primary pocket of the carrier plate, the primary prism element including an array of facets oriented at a first angle, and a secondary prism element disposed within a secondary pocket of the carrier plate adjacent to the primary pocket, the secondary prism element including an array of facets oriented at a second angle.

Example 14: The geometric waveguide of Example 13, where a top surface of the carrier plate is co-planar with a top surface of the primary prism element, and the top surface of the carrier plate is co-planar with a top surface of the secondary prism element.

Example 15: The geometric waveguide of any of Examples 13 and 14, where a refractive index of the carrier plate, a refractive index of the primary prism element, and a refractive index of the secondary prism element are substantially equal.

Example 16: The geometric waveguide of any of Examples 13-15, where the top and bottom surfaces of the carrier plate are co-planar.

Example 17: A method includes forming a primary prism element, forming a secondary prism element, forming a functional coating over an active surface of the primary prism element, forming a functional coating over an active surface of the secondary prism element, aligning and bonding the primary prism element to a carrier plate, and aligning and bonding the secondary prism element to the carrier plate.

Example 18: The method of Example 17, where forming the primary prism element includes molding a first optical polymer and forming the secondary prism element includes molding a second optical polymer.

Example 19: The method of any of Examples 17 and 18, where the functional coating formed over the active surface of the primary prism element has a refractive index that is less than a refractive index of the primary prism element, and the functional coating formed over the active surface of the secondary prism element has a refractive index that is less than a refractive index of the secondary prism element.

Example 20: The method of any of Examples 17-19, further including planarizing opposing surfaces of the carrier plate.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (e.g., augmented-reality system 800 in FIG. 8) or that visually immerses a user in an artificial reality (e.g., virtual-reality system 900 in FIG. 9). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 8, augmented-reality system 800 may include an eyewear device 802 with a frame 810 configured to hold a left display device 815(A) and a right display device 815(B) in front of a user's eyes. Display devices 815(A) and 815(B) may act together or independently to present an image or series of images to a user. While augmented-reality system 800 includes two displays, embodiments of this disclosure may be implemented in augmented-reality systems with a single NED or more than two NEDs.

In some embodiments, augmented-reality system 800 may include one or more sensors, such as sensor 840. Sensor 840 may generate measurement signals in response to motion of augmented-reality system 800 and may be located on substantially any portion of frame 810. Sensor 840 may represent a position sensor, an inertial measurement unit (IMU), a depth camera assembly, a structured light emitter and/or detector, or any combination thereof. In some embodiments, augmented-reality system 800 may or may not include sensor 840 or may include more than one sensor. In embodiments in which sensor 840 includes an IMU, the IMU may generate calibration data based on measurement signals from sensor 840. Examples of sensor 840 may include, without limitation, accelerometers, gyroscopes, magnetometers, other suitable types of sensors that detect motion, sensors used for error correction of the IMU, or some combination thereof.

Augmented-reality system 800 may also include a microphone array with a plurality of acoustic transducers 820(A)-820(J), referred to collectively as acoustic transducers 820. Acoustic transducers 820 may be transducers that detect air pressure variations induced by sound waves. Each acoustic transducer 820 may be configured to detect sound and convert the detected sound into an electronic format (e.g., an analog or digital format). The microphone array in FIG. 8 may include, for example, ten acoustic transducers: 820(A) and 820(B), which may be designed to be placed inside a corresponding ear of the user, acoustic transducers 820(C), 820(D), 820(E), 820(F), 820(G), and 820(H), which may be positioned at various locations on frame 810, and/or acoustic transducers 820(I) and 820(J), which may be positioned on a corresponding neckband 805.

In some embodiments, one or more of acoustic transducers 820(A)-(F) may be used as output transducers (e.g., speakers). For example, acoustic transducers 820(A) and/or 820(B) may be earbuds or any other suitable type of headphone or speaker.

The configuration of acoustic transducers 820 of the microphone array may vary. While augmented-reality system 800 is shown in FIG. 8 as having ten acoustic transducers 820, the number of acoustic transducers 820 may be greater or less than ten. In some embodiments, using higher numbers of acoustic transducers 820 may increase the amount of audio information collected and/or the sensitivity and accuracy of the audio information. In contrast, using a lower number of acoustic transducers 820 may decrease the computing power required by an associated controller 850 to process the collected audio information. In addition, the position of each acoustic transducer 820 of the microphone array may vary. For example, the position of an acoustic transducer 820 may include a defined position on the user, a defined coordinate on frame 810, an orientation associated with each acoustic transducer 820, or some combination thereof.

Acoustic transducers 820(A) and 820(B) may be positioned on different parts of the user's ear, such as behind the pinna, behind the tragus, and/or within the auricle or fossa. Or there may be additional acoustic transducers 820 on or surrounding the ear in addition to acoustic transducers 820 inside the ear canal. Having an acoustic transducer 820 positioned next to an ear canal of a user may enable the microphone array to collect information on how sounds arrive at the ear canal. By positioning at least two of acoustic transducers 820 on either side of a user's head (e.g., as binaural microphones), augmented-reality device 800 may simulate binaural hearing and capture a 3D stereo sound field around about a user's head. In some embodiments, acoustic transducers 820(A) and 820(B) may be connected to augmented-reality system 800 via a wired connection 830, and in other embodiments acoustic transducers 820(A) and 820(B) may be connected to augmented-reality system 800 via a wireless connection (e.g., a Bluetooth connection). In still other embodiments, acoustic transducers 820(A) and 820(B) may not be used at all in conjunction with augmented-reality system 800.

Acoustic transducers 820 on frame 810 may be positioned along the length of the temples, across the bridge, above or below display devices 815(A) and 815(B), or some combination thereof. Acoustic transducers 820 may be oriented such that the microphone array is able to detect sounds in a wide range of directions surrounding the user wearing the augmented-reality system 800. In some embodiments, an optimization process may be performed during manufacturing of augmented-reality system 800 to determine relative positioning of each acoustic transducer 820 in the microphone array.

In some examples, augmented-reality system 800 may include or be connected to an external device (e.g., a paired device), such as neckband 805. Neckband 805 generally represents any type or form of paired device. Thus, the following discussion of neckband 805 may also apply to various other paired devices, such as charging cases, smart watches, smart phones, wrist bands, other wearable devices, hand-held controllers, tablet computers, laptop computers, other external compute devices, etc.

As shown, neckband 805 may be coupled to eyewear device 802 via one or more connectors. The connectors may be wired or wireless and may include electrical and/or non-electrical (e.g., structural) components. In some cases, eyewear device 802 and neckband 805 may operate independently without any wired or wireless connection between them. While FIG. 8 illustrates the components of eyewear device 802 and neckband 805 in example locations on eyewear device 802 and neckband 805, the components may be located elsewhere and/or distributed differently on eyewear device 802 and/or neckband 805. In some embodiments, the components of eyewear device 802 and neckband 805 may be located on one or more additional peripheral devices paired with eyewear device 802, neckband 805, or some combination thereof.

Pairing external devices, such as neckband 805, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 800 may be provided by a paired device or shared between a paired device and an eyewear device, thus reducing the weight, heat profile, and form factor of the eyewear device overall while still retaining desired functionality. For example, neckband 805 may allow components that would otherwise be included on an eyewear device to be included in neckband 805 since users may tolerate a heavier weight load on their shoulders than they would tolerate on their heads. Neckband 805 may also have a larger surface area over which to diffuse and disperse heat to the ambient environment. Thus, neckband 805 may allow for greater battery and computation capacity than might otherwise have been possible on a stand-alone eyewear device. Since weight carried in neckband 805 may be less invasive to a user than weight carried in eyewear device 802, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 805 may be communicatively coupled with eyewear device 802 and/or to other devices. These other devices may provide certain functions (e.g., tracking, localizing, depth mapping, processing, storage, etc.) to augmented-reality system 800. In the embodiment of FIG. 8, neckband 805 may include two acoustic transducers (e.g., 820(I) and 820(J)) that are part of the microphone array (or potentially form their own microphone subarray). Neckband 805 may also include a controller 825 and a power source 835.

Acoustic transducers 820(I) and 820(J) of neckband 805 may be configured to detect sound and convert the detected sound into an electronic format (analog or digital). In the embodiment of FIG. 8, acoustic transducers 820(I) and 820(J) may be positioned on neckband 805, thereby increasing the distance between the neckband acoustic transducers 820(I) and 820(J) and other acoustic transducers 820 positioned on eyewear device 802. In some cases, increasing the distance between acoustic transducers 820 of the microphone array may improve the accuracy of beamforming performed via the microphone array. For example, if a sound is detected by acoustic transducers 820(C) and 820(D) and the distance between acoustic transducers 820(C) and 820(D) is greater than, e.g., the distance between acoustic transducers 820(D) and 820(E), the determined source location of the detected sound may be more accurate than if the sound had been detected by acoustic transducers 820(D) and 820(E).

Controller 825 of neckband 805 may process information generated by the sensors on neckband 805 and/or augmented-reality system 800. For example, controller 825 may process information from the microphone array that describes sounds detected by the microphone array. For each detected sound, controller 825 may perform a direction-of-arrival (DOA) estimation to estimate a direction from which the detected sound arrived at the microphone array. As the microphone array detects sounds, controller 825 may populate an audio data set with the information. In embodiments in which augmented-reality system 800 includes an inertial measurement unit, controller 825 may compute all inertial and spatial calculations from the IMU located on eyewear device 802. A connector may convey information between augmented-reality system 800 and neckband 805 and between augmented-reality system 800 and controller 825. The information may be in the form of optical data, electrical data, wireless data, or any other transmittable data form. Moving the processing of information generated by augmented-reality system 800 to neckband 805 may reduce weight and heat in eyewear device 802, making it more comfortable to the user.

Power source 835 in neckband 805 may provide power to eyewear device 802 and/or to neckband 805. Power source 835 may include, without limitation, lithium ion batteries, lithium-polymer batteries, primary lithium batteries, alkaline batteries, or any other form of power storage. In some cases, power source 835 may be a wired power source. Including power source 835 on neckband 805 instead of on eyewear device 802 may help better distribute the weight and heat generated by power source 835.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 900 in FIG. 9, that mostly or completely covers a user's field of view. Virtual-reality system 900 may include a front rigid body 902 and a band 904 shaped to fit around a user's head. Virtual-reality system 900 may also include output audio transducers 906(A) and 906(B). Furthermore, while not shown in FIG. 9, front rigid body 902 may include one or more electronic elements, including one or more electronic displays, one or more inertial measurement units (IMUs), one or more tracking emitters or detectors, and/or any other suitable device or system for creating an artificial reality experience.

Artificial-reality systems may include a variety of types of visual feedback mechanisms. For example, display devices in augmented-reality system 800 and/or virtual-reality system 900 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. Artificial-reality systems may include a single display screen for both eyes or may provide a display screen for each eye, which may allow for additional flexibility for varifocal adjustments or for correcting a user's refractive error. Some artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some artificial-reality systems may include one or more projection systems. For example, display devices in augmented-reality system 800 and/or virtual-reality system 900 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

Artificial-reality systems may also include various types of computer vision components and subsystems. For example, augmented-reality system 800 and/or virtual-reality system 900 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

Artificial-reality systems may also include one or more input and/or output audio transducers. In the examples shown in FIG. 9, output audio transducers 906(A) and 906(B) may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

While not shown in FIG. 8, artificial-reality systems may include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a prism that comprises or includes polycarbonate include embodiments where a prism consists essentially of polycarbonate and embodiments where a prism consists of polycarbonate.

## Claims

1. A geometric waveguide comprising:
a carrier plate;
an input prism mounted within a recess formed in the carrier plate;
a primary prism element disposed within a primary pocket of the carrier plate; and
a secondary prism element disposed within a secondary pocket of the carrier plate.

2. The geometric waveguide of claim 1, wherein the input prism comprises glass.

3. The geometric waveguide of claim 1 or claim 2, wherein the primary prism element and the secondary prism element each comprise a polymer material; and/or preferably
wherein a composition of the primary prism element is substantially equivalent to a composition of the secondary prism element; and/or preferably
wherein the primary prism element and the secondary prism element are each bonded to the carrier plate with an optical adhesive.

4. The geometric waveguide of any preceding claim, wherein a refractive index of the primary prism element is substantially equal to a refractive index of the secondary prism element.

5. The geometric waveguide of any preceding claim, wherein the primary prism element and the secondary prism element each comprise an array of parallel facets.

6. The geometric waveguide of any preceding claim, wherein the primary prism element comprises an array of facets that merge with a complementary structure formed in the primary pocket of the carrier plate, and the secondary prism element comprises an array of facets that merge with a complementary structure formed in the secondary pocket of the carrier plate; and preferably
wherein a surface of the primary prism element opposite to the primary prism element array of facets is substantially planar, a surface of the secondary prism element opposite to the secondary prism element array of facets is substantially planar, and the substantially planar surfaces are substantially co-planar.

7. The geometric waveguide of any preceding claim, further comprising a capping layer disposed over both a surface of the primary prism element opposite to the primary prism element array of facets and a surface of the secondary prism element opposite to the secondary prism element array of facets; and preferably
wherein a refractive index of the capping layer is less than a refractive index of the primary prism element and less than a refractive index of the secondary prism element.

8. The geometric waveguide of any preceding claim, wherein light incident on the primary prism element is directed to the secondary prism element.

9. A geometric waveguide comprising:
a carrier plate;
a primary prism element disposed within a primary pocket of the carrier plate, the primary prism element comprising an array of facets oriented at a first angle; and
a secondary prism element disposed within a secondary pocket of the carrier plate adjacent to the primary pocket, the secondary prism element comprising an array of facets oriented at a second angle.

10. The geometric waveguide of claim 9, wherein:
a top surface of the carrier plate is co-planar with a top surface of the primary prism element; and
the top surface of the carrier plate is co-planar with a top surface of the secondary prism element; and/or preferably
wherein top and bottom surfaces of the carrier plate are co-planar.

11. The geometric waveguide of claim 9 or claim 10, wherein a refractive index of the carrier plate, a refractive index of the primary prism element, and a refractive index of the secondary prism element are substantially equal.

12. A method comprising:
forming a primary prism element;
forming a secondary prism element;
forming a functional coating over an active surface of the primary prism element;
forming a functional coating over an active surface of the secondary prism element;
aligning and bonding the primary prism element to a carrier plate; and
aligning and bonding the secondary prism element to the carrier plate.

13. The method of claim 12, wherein forming the primary prism element comprises molding a first optical polymer, and forming the secondary prism element comprises molding a second optical polymer.

14. The method of claim 12 or claim 13, wherein the functional coating formed over the active surface of the primary prism element has a refractive index that is less than a refractive index of the primary prism element, and the functional coating formed over the active surface of the secondary prism element has a refractive index that is less than a refractive index of the secondary prism element.

15. The method of any one of claims 12 to 14, further comprising planarizing opposing surfaces of the carrier plate.
